# EUROPÄISCHE PATENTANMELDUNG

(11) **EP 2 871 501 A1**
(43) Veröffentlichungstag der Anmeldung: **13.05.2015**
(21) Anmeldenummer: 14190138.9
(22) Anmeldetag: 23.10.2014
(51) Int. Cl.: G02B 6/00, F21V 8/00, G09G 3/34

(54) **Feldgerät mit Anzeigevorrichtung**

(30) Priorität: 24.10.2013 DE 102013017563
(71) Anmelder: Krohne Messtechnik GmbH, 47058 Duisburg (DE)
(72) Erfinder: Brockhaus, Helmut, 46145 Oberhausen (DE); Schwenger, Ulrike, 45889 Gelsenkirchen (DE)
(74) Vertreter: Gesthuysen Patent- und Rechtsanwälte

(57) **Zusammenfassung**

Beschrieben und dargestellt ist ein Feldgerät (1) mit einer Anzeigevorrichtung (4).

Der Erfindung liegt die Aufgabe zugrunde, ein Feldgerät anzugeben, dessen Anzeigevorrichtung eine möglichst hohe Flexibilität der Darstellung bei möglichst geringem apparativen Aufbau erlaubt.

Die Aufgabe wird bei dem in Rede stehenden Feldgerät dadurch gelöst, dass die Anzeigevorrichtung (4) über eine Lichtleitervorrichtung (8) verfügt und dass eine Leuchteinheit (12, 14) vorgesehen ist, die in Richtung der Lichtleitervorrichtung (8) Licht abstrahlt.

## Beschreibung

Die Erfindung betrifft ein Feldgerät mit mindestens einer Anzeigevorrichtung. Bei dem Feldgerät handelt es sich beispielsweise um ein Messgerät zur Bestimmung mindestens einer Messgröße (z. B. Füllstand, Durchfluss, pH-Wert oder Temperatur) eines Mediums (z. B. einer Flüssigkeit, eines Schüttguts, eines Gases oder eines Gemischs) oder eines Prozesses. Alternativ handelt es sich bei dem Feldgerät um einen Aktor zur Beeinflussung eines Prozesses bzw. einer Prozessgröße.

In der Prozessautomatisierung ist es im Stand der Technik weitgehend vorgesehen, dass Feldgeräte über sog. Feldbusse mit Leitwarten verbunden sind und von diesen gesteuert werden bzw. an diese ihre Daten übermitteln. Teilweise finden sich jedoch weiterhin Feldgeräte mit Anzeigeeinheiten - sogenannte Displays - zur direkten Ausgabe von Daten oder Informationen bzw. für einen direkten Dialog zwischen einem Benutzer und dem Feldgerät. Diese Displays sind damit auch Teile von sog. "Human-Machine-Interfaces".

Solche Vor-Ort-Displays können in Abhängigkeit von den herrschenden Umgebungsbedingungen manchmal schwierig abzulesen sein. Weiterhin kann es aufgrund der Vielfalt der dargestellten Informationen für einen Benutzer aufwändig sein, wesentliche Informationen schnell und effektiv zu erfassen.

In der Patentschrift US 4,734,619 wird ein Display beschrieben, bei dem für eine verbesserte Lesbarkeit eine Hintergnindfarbe und die Farbe der darstellenden Elemente separat gewählt und eingestellt werden. Die eigentliche Darstellung erfolgt dabei über eine Sieben-Segment-Anzeige, wodurch die Möglichkeit der darstellbaren Informationen beschränkt ist. Für jedes Segment und für den Hintergrund sind jeweils drei unterschiedliche Leuchtdioden (LEDs) vorgesehen. Dies macht die Realisierung des Displays aufwändig und kostenintensiv.

Ein Display, dessen gesamter Hintergrund einen Farbumschlag in dem Fall erfährt, dass ein Messwert außerhalb eines definierten Bereichs liegt, beschreibt die Offenlegungsschrift EP 2 546 823 A1.

Der Erfindung liegt daher die Aufgabe zugrunde, ein Feldgerät anzugeben, dessen Anzeigevorrichtung eine möglichst hohe Flexibilität der Darstellung bei möglichst geringem apparativen Aufbau erlaubt.

Das erfindungsgemäße Feldgerät, bei dem die zuvor hergeleitete und aufgezeigte Aufgabe gelöst ist, ist zunächst und im Wesentlichen dadurch gekennzeichnet, dass die Anzeigevorrichtung über mindestens eine Lichtleitervorrichtung verfügt, dass mindestens eine Leuchteinheit vorgesehen ist und dass die Lichtleitervorrichtung und die mindestens eine Leuchteinheit derartig ausgestaltet und relativ zueinander angeordnet sind, dass die Leuchteinheit in Richtung der Lichtleitervorrichtung Licht abstrahlt. Die Leuchteinheit ist dabei insbesondere auch der Anzeigevorrichtung zugeordnet.

Lichtleiter sind allgemein transparente Bauteile, die Licht führen. Die Lichtleitung erfolgt dabei durch Reflexion an der Grenzfläche des Lichtleiters entweder durch Totalreflexion auf Grund eines geringeren Brechungsindex des den Lichtleiter umgebenden Mediums oder durch Verspiegelung der Grenzfläche.

Weitere im Stand der Technik bekannte Lichtleiter sind planare Lichtwellenleiterstrukturen (PLWL), die zumindest teilweise aus Kunststoff, wie z. B. PMMA (Polymethylmethacrylat, Acryl- oder Plexiglas) oder Polycarbonat bestehen.

Die Lichtleitervorrichtung der Anzeigevorrichtung des erfindungsgemäßen Feldgerätes ist vorzugweise planar ausgestaltet, so dass sich insbesondere eine größere Fläche zur Abstrahlung von Licht ergibt. Durch eine großflächige Abstrahlung wird die Lesbarkeit der Anzeige bzw. der Signalcharakter erhöht. Weiterhin lassen sich über eine größere Fläche beispielweise auch besondere Effekte durch das Zusammenwirken von unterschiedlichen Lichtquellen oder durch das Einbringen von Strukturen in der Lichtleitervorrichtung bewirken.

Bei dem erfindungsgemäßen Feldgerät wird in der Anzeigevorrichtung eine Lichtleitervorrichtung verwendet, die das Licht einer Leuchteinheit leitet.

In einer Variante dient mindestens eine Leuchteinheit als Fehlerzustandbeleuchtung und strahlt Licht einer vorgebbaren Signalfarbe ab.

Ein Fehlerzustand ist beispielsweise, dass ein Fehler im Feldgerät auftritt, so dass z. B. eine Funktionalität nicht ausführbar ist.

Handelt es sich bei dem Feldgerät insbesondere um einen Sensor, so besteht in einer Ausgestaltung ein Fehlerzustand darin, dass ein ermittelter Messwert für eine Prozessgröße außerhalb eines vorgegebenen Intervalls liegt. Alternativ kann ein Fehlerzustand darin bestehen, dass ein aktueller Messwert in Relation zu vorherigen Messwerten nicht plausibel ist, z. B. eine zu große Abweichung aufweist.

Der Fehlerzustand wird in einer Ausgestaltung aufgrund eines Abgleichs des Feldgeräts mit von ihm selbst ermittelten Werten erkannt; es handelt sich also um einen rein internen Abgleich von vom Feldgerät selbst ermittelten bzw. gemessenen Werten.

In einer weiteren Ausgestaltung besteht ein Fehlerzustand darin, dass erkannt wird, dass eine Datenkommunikation z. B. über einen Feldbus, mit dem das Feldgerät verbunden ist, nicht richtig funktioniert. Hierfür wird beispielweise eine Schnittstelle des Feldgeräts und die Datenkommunikation darüber überwacht.

Tritt ein Fehlerzustand auf, so strahlt die mindestens eine Leuchteinheit - z. B. eine Leuchtdiode - Licht einer vorgebbaren Signalfarbe ab. Beispielsweise handelt es sich bei der Signalfarbe um die Farbe Rot.

Dabei sind in einer Ausgestaltung insbesondere die mindestens eine Leuchteinheit und die Lichtleitervorrichtung derartig ausgestaltet und aufeinander abgestimmt, dass durch die Leuchteinheit nur ein beschränkter Abschnitt der Lichtleitervorrichtung von dem Licht der Leuchteinheit erhellt bzw. ausgeleuchtet bzw. durchleuchtet wird.

In einer alternativen Ausgestaltung wird die Lichtleitervorrichtung durch die als Fehlerzustandbeleuchtung dienende Leuchteinheit im Wesentlichen vollständig ausgeleuchtet.

Die Lichtleitervorrichtung weist in einer Ausgestaltung mindestens eine Abstrahlfläche auf, über die das in ihr geführte Licht abgestrahlt wird.

In Hinsicht auf die als Fehlerzustandbeleuchtung dienende Leuchteinheit ist in einer Ausgestaltung vorgesehen, dass sie mindestens die Lichtleitervorrichtung in Richtung auf die Abstrahlfläche - ggf. beschränkt auf einen gewissen Bereich - durchstrahlt.

Die Leuchteinheit ist also in Richtung auf die Abstrahlfläche ausgerichtet und durchstrahlt damit die Lichtleitervorrichtung. Hierdurch wird in einer Ausgestaltung realisiert, dass das Licht der als Fehlerzustandsbeleuchtung dienenden Leuchteinheit nicht auf einen größeren Bereich der Abstrahlfläche verteilt wird, sondern in einem kleineren, beschränkten Abschnitt verbleibt.

In einer Ausgestaltung ist mindestens eine zumindest teilweise transflektive Anzeigeeinheit vorgesehen. Die Anzeigeeinheit ist in einer Ausgestaltung als Flüssigkristallanzeige (LCD) ausgeführt.

Die transflektive (oder auch transreflektive) Eigenschaft der Anzeigeeinheit bedeutet, dass sie halbdurchlässig ist, so dass sie reflexiv und transmissiv arbeiten kann. D. h. es wird nicht nur Licht für die Darstellung von Inhalten reflektiert, sondern es wird auch Licht hindurchgelassen.

Die transflektive Eigenschaft wird eingesetzt, um über die Lichtleitervorrichtung eine Hintergrundbeleuchtung der Anzeige über die Anzeigeeinheit zu realisieren.

Daher sind in einer Ausgestaltung die Lichtleitervorrichtung und die Anzeigeeinheit derartig ausgestaltet und zueinander angeordnet, dass die Abstrahlfläche der Lichtleitervorrichtung der Anzeigeeinheit zugewandt ist. In dieser Ausgestaltung dient die Anzeigeeinheit der Darstellung der eigentlichen Information und über die Lichtleitervorrichtung wird eine Hintergnindbeleuchtung zur Verfügung gestellt, so dass über die Darstellung der Daten und die Hintergrundbeleuchtung eine möglichst gute Lesbarkeit und auch vorzugweise ein hoher Signalcharakter der auf der Anzeigevorrichtung dargestellten Informationen erzeugt wird.

Das Erkennen des Vorliegens von Fehlerzuständen durch einen Benutzer wird insbesondere dadurch begünstigt, dass mindestens die als Fehlerzustandbeleuchtung dienende Leuchteinheit mindestens die Lichtleitervorrichtung in Richtung auf die Abstrahlfläche und die Anzeigeeinheit durchstrahlt. Das Licht in der Signalfarbe wird also vorzugweise so geführt, dass es für den Benutzer optimal erkennbar ist.

Die besagte als Fehlerzustandbeleuchtung dienende Leuchteinheit durchscheint mit ihrer Signalfarbe die Anzeigeeinheit und erhellt dabei in einer Ausgestaltung einen besonderen Abschnitt der Anzeigeeinheit. Dieser Abschnitt der Anzeigeeinheit stellt beispielweise ein dem entsprechenden Fehlerzustand zugeordnetes Symbol dar. Durch das Licht der Signalfarbe wird der Blick eines Betrachters bzw. des Benutzers gezielt auf den entsprechenden Bereich und die dort dargestellte Information gelenkt.

Vorzugsweise ist daher in einer Ausgestaltung die als Fehlerzustandbeleuchtung dienende Leuchteinheit relativ zu einem Bereich der Anzeigeeinheit angeordnet, der ein mit einem Fehlerzustand assoziiertes Symbol aufweist oder gezielt für den jeweiligen Fehlerzustand darstellt.

In einer Ausgestaltung wird von der Anzeigeeinheit im Falle eines Fehlerzustands zusätzlich zur Signalisierung des Zustands noch eine Erklärung bzw. Erläuterung ausgegeben bzw. angezeigt. Ein Fehler ist dabei allgemein ein außergewöhnlicher Zustand, so dass ein Fehler eine Abweichung vom Normallfall darstellt. Die Erklärung ist dabei eine Beschreibung des Fehlerzustands oder z. B. der Messwert, der außerhalb eines vorgegebenen Bereichs liegt, oder beispielsweise eine Vorgabe, was als Reaktion auf den Fehlerzustand zu unternehmen ist.

In einer alternativen Ausgestaltung sind entsprechenden Erläuterungen auf dem Feldgerät angebracht.

In einer Ausgestaltung ist mindestens eine Steuervorrichtung zum Ansteuern der als Fehlerzustandbeleuchtung dienenden Leuchteinheit vorgesehen.

Die Steuervorrichtung ist insbesondere zum Erkennen mindestens eines Fehlerzustands des Feldgeräts und/oder des Umfelds des Feldgeräts ausgestaltet und steuert in dem Fall, dass ein Fehlerzustand vorliegt, die als Fehlerzustandbeleuchtung dienende Leuchteinheit dahingehend an, dass die als Fehlerzustandbeleuchtung dienende Leuchteinheit Licht der vorgebbaren Signalfarbe abstrahlt.

In einer weiteren Ausgestaltung wird von der Steuervorrichtung auch die Anzeigeeinheit im Fehlerfall derartig angesteuert, dass sie ein entsprechende Anzeige erzeugt oder ggf. eine Darstellung ändert.

Die Steuervorrichtung besteht in einer Ausgestaltung aus mindestens einem Mikroprozessor, der die Vorgänge im Feldgerät oder im Bereich der Peripherie des Feldgeräts überwacht und zumindest in Hinblick auf das Vorliegen eines Fehlers auswertet. Liegt ein solcher Fehler vor, so aktiviert die Steuervorrichtung zumindest die als Fehlerzustandbeleuchtung dienende Leuchteinheit, so dass diese Licht in der Signalfarbe abstrahlt.

In einer weiteren Ausgestaltung wird von der Steuervorrichtung auch die Anzeigeeinheit derartig angesteuert, dass sich im Zusammenwirken zwischen der Anzeigeeinheit und der mindestens einen Leuchteinheit die Signalisierung eines Fehlerzustands ergibt. So bewirkt die Steuervorrichtung beispielweise, dass die Anzeigeeinheit ein dem Fehlerzustand zugeordnetes Zeichen oder Symbol darstellt.

In einer Ausgestaltung werden dabei - ggf. in Zusammenwirkung mit weiteren Leuchteinheiten - Interferenz- bzw. Kohärenzphänomene ausgenutzt, so dass sich z. B. auch räumliche Darstellungseffekte einstellen.

Die Anzeigeeinheit verhält sich im Fehlerfall in Bezug auf die Signalisierung in einer Ausgestaltung zumindest teilweise passiv, da bereits entsprechende Zeichen oder Symbole auf bzw. in der Anzeigeeinheit vorgesehen sind, die durch das Licht in der Signalfarbe der als Fehlerzustandbeleuchtung dienenden Leuchteinheit erleuchtet werden.

In einer alternativen Ausgestaltung agiert die Anzeigeeinheit aktiv, indem sie in Abhängigkeit vom jeweiligen Fehlerzustand Daten oder Informationen gezielt darstellt.

In einer alternativen oder ergänzenden Ausgestaltung zu den vorgehenden Ausführungen ist in einer Ausgestaltung vorgesehen, dass mindestens eine Leuchteinheit als Hintergrundbeleuchtung dient und direkt in eine Seitenfläche der Lichtleitervorrichtung Licht einstrahlt. Das eigentliche Licht der Hintergnindbeleuchtung wird insbesondere direkt in eine Stirnseite eingestrahlt, d. h. vorzugsweise ohne weitere optische Elemente oder das Licht umleitende Effekte.

Das Licht der Hintergrundbeleuchtung wird daher in einer Ausgestaltung von der entsprechenden Leuchteinheit so erzeugt und eingestrahlt, dass die Ausbreitungsrichtung des Lichts in einer Ebene parallel zur Abstrahlfläche der Lichtleitervorrichtung verläuft.

Die Seiten- oder Stirnfläche der Lichtleitervorrichtung wird in dieser Ausgestaltung direkt mit dem Licht einer Leuchteinheit bestrahlt und wird darin geleitet, um vorzugsweise über die Abstrahlfläche der Lichtleitervorrichtung abgestrahlt zu werden. Vorzugweise dient die Lichtleitervorrichtung in einer Ausgestaltung als Hintergrundbeleuchtung für die oben bereits beschriebene transflektive Anzeigeeinheit.

In einer Ausgestaltung ist die Lichtleitervorrichtung im Wesentlichen keilförmig ausgestaltet.

In einer sich daran anschließenden Ausgestaltung ist die Leuchteinheit, die der Hintergrundbeleuchtung dient, an der Stirnseite der keilförmigen Lichtleitervorrichtung mit der größeren Fläche, also auf der Seite der Aufweitung des Keils angeordnet.

In einer Ausgestaltung verfügt die Lichtleitervorrichtung über eine Licht reflektierende Beschichtung. Die Beschichtung befindet sich in einer Ausgestaltung auf einer der Abstrahlfläche gegenüberliegenden Seite. Die Beschichtung kann auch teilweise in einer Aufrauhung bestehen.

Die Beschichtung ist dabei in einer Ausgestaltung im Wesentlichen homogen ausgeführt.

In einer alternativen Ausgestaltung verfügt die Beschichtung über Strukturen oder unterschiedliche Bereiche, die es in Zusammenwirkung mit den Leuchteinheiten erlauben, jeweils unterschiedliche optische Effekte zu erzielen.

Die Beschichtung der Lichtleitervorrichtung dient der Streuung des in der Lichtleitervorrichtung geführten Lichts, so dass insbesondere die Abstrahlfläche auch bei der Verwendung von nur einer als Hintergrundbeleuchtung dienenden Leuchteinheit großflächig ausgeleuchtet wird.

In einer weiteren Ausgestaltung sind mehrere als Hintergrundbeleuchtung dienende Leuchteinheiten vorgesehen.

In einer Ausgestaltung sind mehrere Leuchteinheiten vorgesehen, die der Fehlerzustandbeleuchtung dienen.

In einer Ausgestaltung sind die Fehlerzustandbeleuchtung-Leuchteinheiten an unterschiedlichen Orten platziert, so dass sie auch unterschiedliche Bereiche der Anzeigeeinheit ausleuchten.

In einer alternativen Ausgestaltung leuchten die vorgenannten Leuchteinheiten im Wesentlichen den gleichen Bereich der Anzeigeeinheit aus.

In einer Ausgestaltung strahlen die in der Anzeigevorrichtung verwendeten Leuchteinheiten Licht im Wesentlichen der gleichen Farbe und in einer anderen Ausgestaltung unterschiedlicher Farbe aus.

In einer Ausgestaltung ist das jeweils ausgestrahlte Licht der einzelnen Leuchteinheiten so aufeinander abgestimmt, dass sich bei einer Überlagerung Interferenzeffekte ergeben.

Die Farben des ausgestrahlten Lichts sind in einer anderen Ausgestaltung so ausgewählt und aufeinander abgestimmt, dass sich in den Bereichen, in denen sich das Licht überlagert, additive oder subtraktive Farbeffekte ergeben.

Weiterhin ist in einer Ausgestaltung vorgesehen, dass die Leuchteinheiten zur Fehlzustandbeleuchtung und zur Hintergrundbeleuchtung so ausgestaltet sind und passend angesteuert werden, dass sich durch ihr Zusammenwirken weitere Effekte ergeben.

In einer Ausgestaltung wird dies dadurch ergänzt, dass Bereiche der Anzeigeeinheit, durch die das Licht der mindestens einen als Fehlerzustandbeleuchtung dienenden Lichteinheit fällt, den jeweiligen Fehlerzuständen entsprechende Daten, Informationen oder Symbole darstellen.

In einer Ausgestaltung wird durch eine passende Manipulation der Anzeigeeinheit bzw. der Lichtleitervorrichtung - z. B. durch das Anlegen von Spannungen - eine Durchlässigkeit für das Licht der Leuchteinheiten geändert.

In einer weiteren Ausgestaltung ist zusätzlich wenigstens ein Sensor vorgesehen, der die Helligkeitsverhältnisse in der Umgebung des Feldgeräts bzw. der Anzeigevorrichtung erkennt, so dass die Steuervorrichtung ausgehend von den Messdaten des Sensors die Helligkeit bzw. den Kontrast der Anzeige über die Anzeigeeinheit einstellt.

Weiterhin ist in einer Ausgestaltung wenigstens eine photovoltaische Zelle vorgesehen, die einen Teil des Lichts der Leuchteinheiten in einen elektrischen Strom umwandelt.

In einer Ausgestaltung ist das Feldgerät als Aktor zur Steuerung bzw. Regelung einer Prozessgröße oder eines Prozesses ausgestaltet.

In einer alternativen Ausgestaltung ist das Feldgerät ein Sensor, wofür mindestens eine Messvorrichtung zur Bestimmung mindestens einer Messgröße vorgesehen ist. Bei der Messgröße handelt es sich beispielsweise um den Füllstand, den Durchfluss oder den pH-Wert eines Mediums.

Zum Anschluss des Feldgeräts an einen Feldbus, über den beispielsweise nach einem im Stand der Technik bekannten Standard-Protokoll Daten kommuniziert werden, ist in einer Ausgestaltung mindestens eine Schnittstelle zumindest zum Senden und/oder Empfangen von Daten vorgesehen.

In einer Ausgestaltung überwacht die Steuereinheit über die Schnittstelle den Feldbus und erkennt darüber, ob ein Fehlerzustand vorliegt.

Die Schnittstelle ist in einer weiteren Ausgestaltung eine sog. Service-Schnittstelle, wie sie bei vielen Feldgeräten des Standes der Technik üblich ist.

In einer Ausgestaltung ist die Anzeigevorrichtung mit mindestens einer Abdeckung mit mindestens einem Sichtfenster versorgt. Dabei dient die Abdeckung dem Schutz der Anzeigevorrichtung vor Umwelteinflüssen.

Durch das Sichtfenster hindurch wird der Blick auf die Anzeigeeinheit und/oder zumindest die Effekte der Lichtleitervorrichtung gewährt.

In einer Ausgestaltung ist zusätzlich eine Eingabeeinheit - beispielsweise in Form einiger Tasten - vorgesehen, über die eine Interaktion zwischen einem Benutzer und dem Feldgerät am Einbauort des Feldgeräts möglich ist.

In einer Ausgestaltung ist die - insbesondere transflektive - Anzeigeeinheit zwischen der Lichtleitervorrichtung und dem Sichtfenster angeordnet.

In einer Ausgestaltung ist mindestens eine Leuchteinheit derartig ausgestaltet, dass sie Licht einer variabel einstellbaren Farbe abstrahlt. Die Leuchteinheit erlaubt es, je nachdem, was signalisiert werden soll oder welche Hintergrundfarbe vorgesehen ist, eine andere Farbe zu erzeugen.

In einer Ausgestaltung ist mindestens eine Leuchteinheit eine Leuchtdiode.

Im Einzelnen gibt es nun eine Vielzahl von Möglichkeiten, das erfindungsgemäße Feldgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung eines Feldgerätes im Schnitt und
- Fig. 2: eine schematische Darstellung eines Feldgerätes in Explosionsdarstellung.

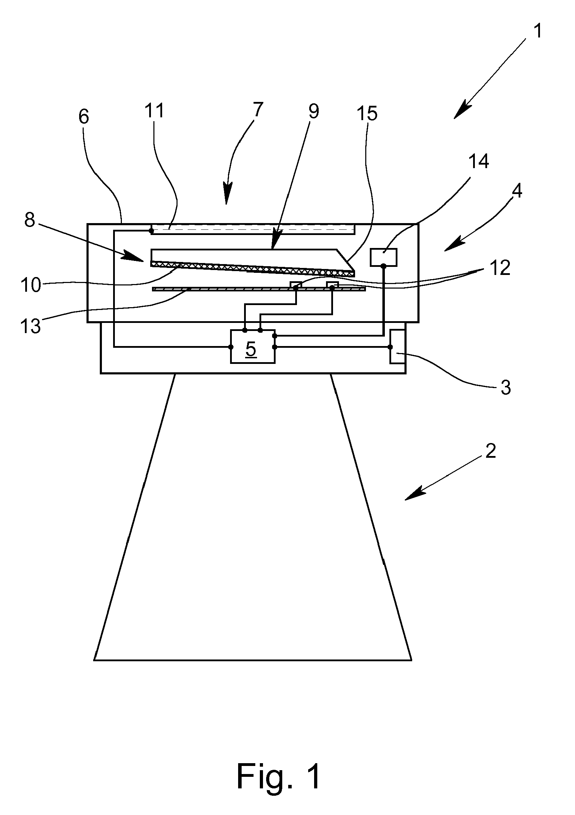

In der Fig. 1 ist schematisch ein Schnitt durch ein Feldgerät 1 dargestellt. Das Feldgerät 1 ist dabei als Sensor ausgestaltet und verfügt über eine Messvorrichtung 2, deren Antenne dem Senden und Empfangen von Mikrowellensignalen zur Bestimmung eines Füllstands eines hier nicht dargestellten Mediums nach dem Radar-Prinzip dient.

Für die Kommunikation der Messdaten beispielsweise über einen - hier nicht dargestellten - Feldbus mit einer - hier ebenfalls nicht dargestellten - Leitwarte ist eine Schnittstelle 3 vorgesehen.

Weiterhin ist für einen Benutzer eine Anzeigevorrichtung 4 vorgesehen, die der Anzeige der Messwerte oder der Eingabe von Bedienparametern am Messort dient.

Die Messung mit der Messvorrichtung 2, die Datenausgabe über die Schnittstelle 3 und auch die Anzeige der Messwerte über die Anzeigevorrichtung 4 wird über eine Steuervorrichtung 5 vorgenommen. Dabei handelt es sich insbesondere um mindestens einen Mikroprozessor, der mit den entsprechenden Komponenten des Feldgeräts 1 verbunden ist.

Die Anzeigevorrichtung 4 verfügt über eine Abdeckung 6, die gegenüber den Prozess- oder Umgebungsbedingungen entsprechend robust ausgestaltet ist und die hier insbesondere über ein Sichtfenster 7 verfügt. Unter dem Sichtfenster 7 im Innenraum der Anzeigevorrichtung 4 befinden sich die Komponenten, die der eigentlichen Darstellung dienen.

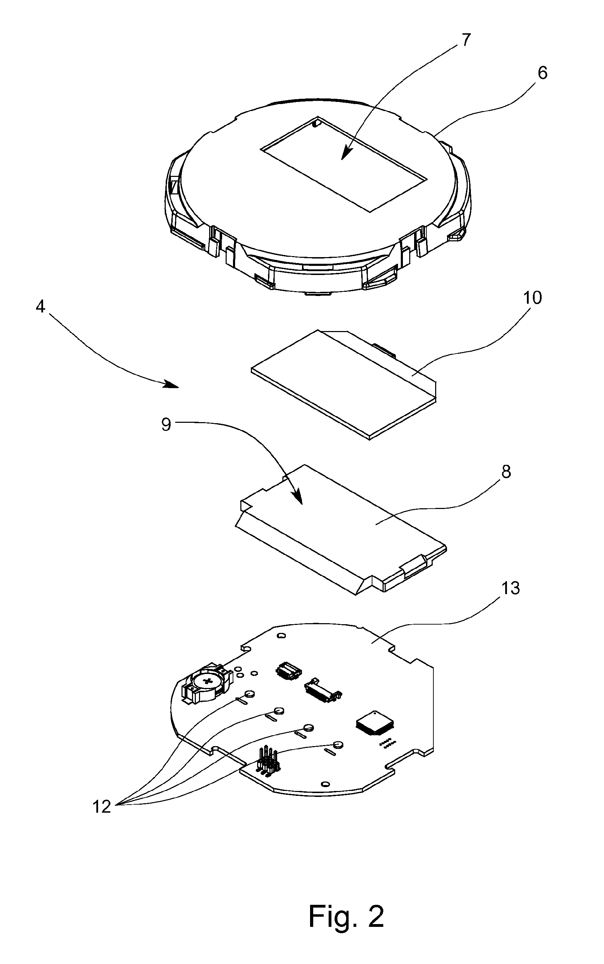

Vorgesehen ist eine Lichtleitervorrichtung 8, die in Richtung des Sichtfensters 7 eine im Wesentlichen rechteckige Abstrahlfläche 9 (siehe Fig. 2) aufweist und die sonst keilartig ausgestaltet ist. Auf der unteren, vom Sichtfenster 7 abgewandten Seite befindet sich eine Beschichtung 10, die im Wesentlichen Licht, das in die Lichtleitervorrichtung 8 eingestrahlt wird, diffus reflektiert und damit eine Art von Hintergrundbeleuchtung erzeugt. Die Lichtleitervorrichtung 8 besteht in einer Ausgestaltung insbesondere zumindest teilweise oder vollständig aus einem entsprechenden Kunststoff.

Zeichnerisch oberhalb der Lichtleitervorrichtung 8 und damit näher in Richtung des Sichtfensters 7 befindet sich eine Anzeigeeinheit 11, bei der es sich hier insbesondere um eine Flüssigkristallanzeige (LCD) handelt, die transflektiv ist, die also Licht durchscheinen lässt. Bei dem durchscheinenden Licht handelt es sich insbesondere um das Hintergrundlicht der Lichtleitervorrichtung 8.

Die Anzeigeeinheit 11 wird von der Steuervorrichtung 5 angesteuert, so dass die eigentliche Anzeige der Messwerte, von Parameterwerten, von Text usw. über die Anzeigeeinheit 11 realisiert wird.

Unterhalb der Lichtleitervorrichtung 8 sind Leuchteinheiten 12 - hier beispielweise in Form von Leuchtdioden - vorgesehen, die farbiges Licht - beispielweise Rot oder Gelb - abstrahlen und dabei direkt durch die Leichtleitervorrichtung 8 hindurchstrahlen und dadurch Bereiche der Anzeigeeinheit 11 gezielt mit einer besonderen Signalfarbe erleuchten.

In einer weiteren - hier nicht dargestellten - Ausgestaltung wird Licht im Infrarotbereich ausgestrahlt, so dass sich ein Temperatureffekt einstellt.

Die Leuchteinheiten 12 sind auf einer Leiterplatte 13 befestigt.

Die Aktivierung der Leuchteinheiten 12, die damit der Signalisierung von Fehlerzuständen dienen, geschieht durch die Steuervorrichtung 5.

Für die Erfüllung ihrer Zwecke verfügt die Steuervorrichtung 5 über die Fähigkeit, insbesondere Fehler im Feldgerät 1 selbst zu erkennen. Ein Fehler sei dabei ganz allgemein ein Zustand, der sich von dem normalen Betrieb unterscheidet. Damit geht einher, dass die Steuervorrichtung 5 über eine vorgebbare Definition der Normalität verfügt.

Bei einem Fehler handelt es sich beispielsweise um einen Funktionsfehler im Feldgerät 1, um einen Fehler bei einer Messung mit der Messvorrichtung 2 oder um Fehler im Umfeld des Feldgerätes 1. Es handelt sich insbesondere auch um Messwerte, die außerhalb eines vorgebbaren Intervalls liegen oder beispielsweise um Probleme mit der Datenkommunikation über einen Feldbus, mit dem das Feldgerät 1 über die Schnittstelle 3 verbunden ist. Die Anzahl und Art der Fehlerzustände kann dabei auch speziell für den Anwendungsfall des Feldgeräts 1 zugeschnitten sein.

Wird ein solcher Fehler von der Steuereinheit 5 erkannt, so schaltet sie die entsprechende Leuchteinheit 12 ein und lässt dadurch z. B. ein Symbol auf der Anzeigeeinheit 11 mit einem entsprechend hohen Kontrast erscheinen.

Hierfür verfügt die Anzeigeeinheit 11 insbesondere über - vorzugsweise auch den bestehenden Standards entsprechende - Fehler-Symbole, die durch die besondere Fehlerzustandbeleuchtung durch die entsprechenden Leuchteinheit 12 aufflammen.

In einer besonderen Variante wird ein Fehlerzustand durch das gemeinsame Ansteuern der Leuchteinheiten 12 der Fehlerzustandbeleuchtung und der Leuchteinheiten 14 der Hintergrundbeleuchtung betont, indem sich durch die Zusammenschaltung von unterschiedlichen Farben Effekte einstellen.

Diese Art der - insbesondere nur teilweise die Anzeigeeinheit 11 ausfüllenden - Beleuchtung für den Fehlerfall unterscheidet sich von der normalen Hintergnindbeleuchtung, wie sie durch die Leuchteinheit 14 realisiert wird, die seitlich zur Seitenfläche 15 der Lichtleitervorrichtung 8 angeordnet ist. Durch den erzeugten Unterschied wird das Vorliegen des Fehlerzustands für den Benutzer leichter und schneller erkennbar.

Die Seitenfläche 15 der Lichtleitervorrichtung 8 ist dabei zugleich auch die größere Seite des Keils, den die Lichtleitervorrichtung 8 bildet.

Die Hintergnindbeleuchtungs-Leuchteinheit 14 strahlt seitlich und insbesondere direkt in die Lichtleitervorrichtung 8 ein und wird dort diffus an der Beschichtung 10 gestreut, so dass sich die Hintergrundbeleuchtung für die Anzeigeeinheit 11 ergibt.

In der Fig. 2 sind einige Komponenten einer Anzeigevorrichtung 4 eines Feldgeräts in Explosionsdarstellung gezeigt.

Auf einer Leiterplatte 13 befinden sich insgesamt vier Leuchteinheiten 12, die jeweils einer speziellen Fehlerzustandbeleuchtung dienen und jeweils nur einen Teilbereich der Anzeigeeinheit 11 bzw. der Lichtleitervorrichtung 8 durchstrahlen.

Oberhalb der vier Leuchteinheiten 12 befindet sich die Lichtleitervorrichtung 8, die eine Hintergrundbeleuchtung bereitstellt, indem eine entsprechende - hier nicht dargestellte - Leuchteinheit 14 an einer Stirnseite Licht einstrahlt.

Die Hintergrundbeleuchtung scheint dabei durch die Anzeigeeinheit 11 hindurch, die zumindest teilweise transflektiv ausgestaltet ist und der eigentlichen Darstellung der Daten bzw. Informationen über die Anzeigevorrichtung 4 dient.

Umfasst werden die Komponenten von einer Abdeckung 6, die entsprechend widerstandsfähig ausgestaltet ist und die über ein Sichtfenster 7 verfügt. Oberhalb oder unterhalb des Sichtfensters 7 ist vorzugsweise noch eine - hier nicht dargestellte - abdeckende Folie vorgesehen.

## Patentansprüche

1. Feldgerät (1) mit mindestens einer Anzeigevorrichtung (4),
**dadurch gekennzeichnet,**
**dass** die Anzeigevorrichtung (4) über mindestens eine Lichtleitervorrichtung (8) verfügt, dass mindestens eine Leuchteinheit (12, 14) vorgesehen ist und dass die Lichtleitervorrichtung (8) und die mindestens eine Leuchteinheit (12, 14) derartig ausgestaltet und relativ zueinander angeordnet sind, dass die Leuchteinheit (12, 14) in Richtung der Lichtleitervorrichtung (8) Licht abstrahlt.

2. Feldgerät (1) nach Anspruch 1, **dadurch gekennzeichnet, dass** mindestens eine Leuchteinheit (12) als Fehlerzustandbeleuchtung dient und Licht einer vorgebbaren Signalfarbe abstrahlt.

3. Feldgerät (1) nach Anspruch 1 oder 2, **dadurch gekennzeichnet, dass** die Lichtleitervorrichtung (8) mindestens eine Abstrahlfläche (9) aufweist.

4. Feldgerät (1) nach Ansprüchen 2 und 3, **dadurch gekennzeichnet, dass** mindestens die als Fehlerzustandbeleuchtung dienende Leuchteinheit (12) mindestens die Lichtleitervorrichtung (8) in Richtung auf die Abstrahlfläche (9) durchstrahlt.

5. Feldgerät (1) nach einem der Ansprüche 1 bis 4, **dadurch gekennzeichnet, dass** mindestens eine zumindest teilweise transflektive Anzeigeeinheit (11) vorgesehen ist.

6. Feldgerät (1) nach Ansprüchen 3 und 5, **dadurch gekennzeichnet, dass** die Lichtleitervorrichtung (8) und die Anzeigeeinheit (11) derartig ausgestaltet und zueinander angeordnet sind, dass die Abstrahlfläche (9) der Lichtleitervorrichtung (8) der Anzeigeeinheit (11) zugewandt ist.

7. Feldgerät (1) nach Ansprüchen 4 und 6, **dadurch gekennzeichnet, dass** mindestens die als Fehlerzustandbeleuchtung dienende Leuchteinheit (12) mindestens die Lichtleitemorrichtung (8) in Richtung auf die Abstrahlfläche (9) und die Anzeigeeinheit (11) durchstrahlt.

8. Feldgerät (1) nach Anspruch 2 oder nach Anspruch 2 und einem der Ansprüche 3 bis 7, **dadurch gekennzeichnet, dass** mindestens eine Steuervorrichtung (5) zum Ansteuern der als Fehlerzustandbeleuchtung dienenden Leuchteinheit (12) vorgesehen ist, dass die Steuervorrichtung (5) zum Erkennen mindestens eines Fehlerzustands des Feldgeräts (1) und/oder des Umfelds des Feldgeräts (1) ausgestaltet ist und dass die Steuervorrichtung (5) in dem Fall, dass ein Fehlerzustand vorliegt, die als Fehlerzustandbeleuchtung dienende Leuchteinheit (12) dahingehend ansteuert, dass die als Fehlerzustandbeleuchtung dienende Leuchteinheit (12) Licht der vorgebbaren Signalfarbe abstrahlt.

9. Feldgerät (1) nach einem der Ansprüche 1 bis 8, **dadurch gekennzeichnet, dass** mindestens eine Leuchteinheit (14) als Hintergrundbeleuchtung dient und direkt in eine Seitenfläche (15) der Lichtleitervorrichtung (8) Licht einstrahlt.

10. Feldgerät (1) nach einem der Ansprüche 1 bis 9, **dadurch gekennzeichnet, dass** die Lichtleitervorrichtung (8) eine Licht reflektierende Beschichtung (10) - insbesondere auf einer der Abstrahlfläche (9) gegenüberliegenden Seite - aufweist.
